# FASCICULE DE BREVET EUROPEEN

(11) **EP 2 285 755 B1**
(45) Date de publication et mention de la délivrance du brevet: **14.12.2011**
(21) Numéro de dépôt: 09738452.3
(22) Date de dépôt: 24.04.2009
(51) Int. Cl.: C04B 41/52, C04B 41/70, B44C 3/12, B44C 5/04

(54) **ELEMENTS DE DECORATION ET LEUR PROCEDE DE FABRICATION**
ZIERELEMENT UND VERFAHREN ZU SEINER HERSTELLUNG
DECORATIVE ELEMENTS AND MANUFACTURING METHOD THEREOF

(30) Priorité: 29.04.2008 FR 0802396
(43) Date de publication de la demande: 23.02.2011
(73) Titulaire: Boissin, Laurent, 83400 Hyeres (FR)
(72) Inventeur: Boissin, Laurent, 83400 Hyeres (FR)
(74) Mandataire: Hirsch & Associés
(86) Numéro de dépôt international: PCT/IB2009/005362
(87) Numéro de publication internationale: WO 2009/133439

(56) Documents cités:
- WO-A-2006/040480

## Description

### DOMAINE DE L'INVENTION

La présente invention concerne des éléments de décoration ainsi que leur fabrication, et l'utilisation d'un ou de plusieurs de ces éléments de décoration pour former un décor, notamment un décor mural.

### ARRIERE-PLAN TECHNIQUE

Afin de former un décor, en particulier une image complexe et de grande taille, sur un support mural, plusieurs méthodes sont connues. Si l'on met de côté les techniques consistant à peindre ou imprimer une image sur un support flexible (tissu, tapisserie, papier, film plastique...), la principale méthode utilisée depuis l'antiquité est celle de la fresque.

La technique traditionnelle de la fresque consiste à revêtir un mur de couches successives de mélanges de chaux et de sable, le sable étant de plus en plus fin, puis de peindre manuellement une image sur la dernière couche (dite intonato) encore fraîche. Bien que cette technique soit encore parfois utilisée de nos jours, elle est extrêmement coûteuse car d'une part elle est particulièrement difficile à maîtriser, et d'autre part elle demeure une technique artistique, impossible à mettre en oeuvre à une échelle industrielle, puisque qu'il est nécessaire de peindre l'image manuellement.

Afin de mettre en oeuvre une technique de décoration à moindre coût, et à une échelle industrielle, il est nécessaire de disposer d'éléments de décoration de taille réduite portant chacun une partie de l'image du décor, qui peuvent être fabriqués sur un site de production, puis transportés jusqu'au site d'installation et assemblés sur un support mural pour reconstituer l'image complète par un système de mosaïque.

Toutefois, les éléments de décoration de ce type qui sont proposés actuellement restent insatisfaisants. Par exemple, les éléments de décoration de type carreaux de faïence (ou analogues) nécessitent une cuisson dans un four pour assurer l'adhésion des pigments au matériau de support. Outre le fait que cette cuisson exige un matériel complexe et coûteux pour pouvoir être mise en oeuvre, elle rend d'autre part impossible le recours aux encres modernes qui sont utilisées dans les dispositifs d'impression numérique. Ainsi, il est difficilement envisageable de reconstituer des décors consistant en des images complexes (reproduction d'un tableau ou d'une photographie par exemple) à partir de tels éléments de décoration.

L'utilisation d'autres types de support (plaques d'aluminium ou de plastique, bois, verre, carton) ne donne pas non plus entière satisfaction, soit parce que l'adhérence des encres sur ces supports est insuffisante, soit parce que les supports eux-mêmes sont perçus comme de qualité médiocre.

Par ailleurs, les tentatives effectuées jusqu'à présent pour imprimer une image sur un élément de décoration formé à partir de matériaux de construction ont échoué. Ainsi les encres adhèrent mal sur la pierre tout comme sur les supports à base de ciment ou de plâtre, dont la surface a tendance à être pulvérulente, voire cassante. A l'usage, les encres s'écaillent rapidement.

Le document WO 2006/040480 propose une alternative selon laquelle on fournit un support souple (plastique ou textile), sur lequel on imprime une image, puis on colle l'ensemble sur la surface à décorer. Cette méthode aboutit à une imperméabilisation de la surface et sa durabilité reste insuffisante.

Il existe donc un réel besoin de mettre au point des éléments de décoration permettant de reconstituer un décor, notamment mural, en forme d'image complexe, lesdits éléments de décoration pouvant être produits de façon industrielle et présentant des propriétés satisfaisantes de solidité, d'adhérence de l'encre au support et de pérennité.

### RESUME DE L'INVENTION

L'invention concerne en premier lieu un élément de décoration comprenant:
- un support formé d'un matériau comprenant des hydrates de ciment et de l'hydrate et / ou carbonate de chaux;
- une couche intermédiaire disposée sur le support, comprenant de l'hydrate et / ou carbonate de chaux;
- une couche picturale disposée sur la couche intermédiaire, comprenant des pigments.

Selon un mode de réalisation, la couche picturale comprend au moins un film d'encre photosensible durcie, de couleur uniforme ou formant une image.

Selon un mode de réalisation, la couche picturale comprend un premier film d'encre photosensible de couleur uniforme, disposé sur la couche intermédiaire, ainsi qu'un deuxième film d'encre photosensible formant une image, disposé sur le premier film.

Selon un mode de réalisation, l'élement de décoration comprend également une structure de base sur laquelle est disposé le support, ladite structure de base étant de préférence une plaque ou un panneau de construction.

Selon un mode de réalisation, l'élément de décoration comprend également une couche de protection disposée sur la couche picturale, de préférence constituée de cire.

Selon un mode de réalisation, le matériau du support comprend:
- de 20 à 80%, de préférence de 30 à 70%, de manière plus particulièrement préférée de 40 à 60%, idéalement de 45 à 55%, en masse, d'hydrates de ciment; et
- de 20 à 80%, de préférence de 30 à 70%, de manière plus particulièrement préférée de 40 à 60%, idéalement de 45 à 55%, en masse, d'hydrate et / ou carbonate de chaux.

Selon un mode de réalisation, la couche intermédiaire comprend au moins 60%, de manière plus particulièrement préférée au moins 80%, avantageusement au moins 90%, idéalement au moins 95%, en masse, d'hydrate et / ou carbonate de chaux.

Selon un mode de réalisation:
- le support présente une épaisseur comprise entre 0,2 et 10 cm, de préférence entre 0,3 et 5 cm, de manière plus particulièrement préférée entre 0,4 et 2 cm; et / ou
- la couche intermédiaire présente une épaisseur comprise entre 0,1 et 5 mm, de préférence entre 0,3 et 3 mm, de manière plus particulièrement préférée entre 0,5 et 2 mm; et / ou
- la couche picturale présente une épaisseur comprise entre 0,2 et 10 µm, de préférence entre 0,5 et 5 µm, de manière plus particulièrement préférée entre 0,8 et 3 µm; et / ou
- la couche de protection présente une épaisseur comprise entre 0,2 et 5 µm, de préférence entre 0,5 et 3 µm, de manière plus particulièrement préférée entre 0,8 et 2 µm.

L'invention a également pour objet un procédé de fabrication d'un élément de décoration, comprenant successivement:
- la fourniture d'un support formé d'un matériau comprenant des hydrates de ciment et de l'hydrate et /ou carbonate de chaux;
- la fourniture d'un enduit comprenant de la chaux et de l'eau;
- la formation d'une couche intermédiaire sur le support par application de l'enduit;
- le dépôt de pigments sur la couche intermédiaire, ladite couche intermédiaire étant humide lors du dépôt; et
- le séchage de la couche intermédiaire.

Selon un mode de réalisation, le procédé comprend en outre préalablement la fabrication du support par coulage, prise et séchage d'une composition de support humide comprenant du ciment et de la chaux, le ciment et la chaux étant de préférence dans un rapport massique de 1:4 à 4:1, de manière particulièrement préférée de 3:7 à 7:3, idéalement de 2:3 à 3:2, voire de 9:11 à 11:9.

Selon un mode de réalisation, la composition de support humide est coulée dans un moule ou est coulée sur une structure de base, ladite structure de base étant de préférence une plaque ou un panneau de construction.

Selon un mode de réalisation, le dépôt de pigments consiste en une impression d'un film d'encre photosensible formant une image, au moyen d'une imprimante numérique.

Selon un mode de réalisation, le dépôt de pigments est effectué par application d'un film d'encre photosensible de couleur uniforme.

Selon un mode de réalisation, le procédé comprend une étape supplémentaire de dépôt de pigments après le séchage de la couche intermédiaire, de préférence par impression d'un film d'encre photosensible formant une image, au moyen d'une imprimante numérique.

Selon un mode de réalisation, le procédé comprend une étape finale d'enduction de matériau de protection, de préférence de cire.

Selon un mode de réalisation du procédé, l'élément de décoration susmentionné est tel que décrit ci-dessus.

L'invention a également pour objet un élément de décoration susceptible d'être fabriqué selon le procédé décrit ci-dessus.

L'invention a également pour objet l'utilisation d'un ou plusieurs des éléments de décor ci-dessus pour la réalisation d'un décor, notamment un décor mural.

L'invention a également pour objet un procédé de fabrication d'un décor, comprenant:
- l'assemblage et la fixation d'un ou de plusieurs éléments de décoration tels que décrits ci-dessus, lesdits éléments de décoration étant de forme plane, sur une surface plane, qui est de préférence un mur;
- éventuellement le jointoiement des éléments de décoration fixés; et
- éventuellement l'application d'une couche de protection, de préférence de cire, sur les éléments de décoration fixés.

La présente invention permet de surmonter les inconvénients de l'état de la technique. Elle fournit plus particulièrement des éléments de décoration qui peuvent être produits de façon industrielle et présentent des propriétés satisfaisantes de solidité (par exemple de résistance à la compression) et d'adhérence de l'encre au support. Ces éléments de décoration permettent de reconstituer par juxtaposition un décor, notamment mural, en forme d'image complexe.

Ceci est accompli grâce à l'utilisation d'un support à base de chaux, sur lequel on applique au moins un premier film d'encre alors que le support est encore humide. On bénéficie ainsi des avantages de la technique antique de la fresque (durabilité exceptionnelle du produit, due à la carbonatation progressive de la surface peinte ou imprimée). Mais on bénéficie aussi par ailleurs de la grande souplesse d'utilisation d'une structure en éléments de décoration solides (résistants) et amovibles, qui peuvent être produits industriellement, éventuellement commercialisés, puis assemblés sur un site d'installation distant du site de production.

Selon certains modes de réalisation particuliers, l'invention présente également les caractéristiques avantageuses énumérées ci-dessous.
- L'invention rend possible le recours aux techniques modernes d'impression numérique sur un produit présentant des qualités physiques et structurelles proches de celles des fresques antiques. L'impression numérique permet la reproduction de tout type d'image complexe, de type peinture ou photographie, de façon très simple.
- Au fil des mois et des années, les éléments de décoration assemblés acquièrent une patine caractéristique.
- La carbonatation de la surface, en combinaison avec la présence éventuelle d'une couche de cire recouvrant les éléments de décoration, protège la surface de l'usure et des salissures tout en permettant au matériau de continuer à respirer et à évoluer.

### BREVE DESCRIPTION DES FIGURES

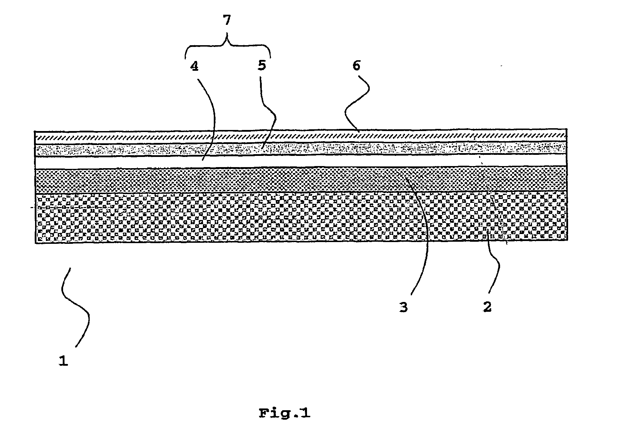

La **figure 1** représente de façon schématique une vue en coupe d'un élément de décoration selon l'invention.

### DESCRIPTION DE MODES DE REALISATION DE L'INVENTION

L'invention est maintenant décrite plus en détail et de façon non limitative dans la description qui suit.

### Eléments de décoration et leur fabrication

Les éléments de décoration selon l'invention sont des éléments mobiles. Bien qu'ils puissent être de toute forme, ils sont avantageusement en forme dé plaques ou de carreaux. De préférence les plaques sont de forme rectangulaire ou carrée, avec une épaisseur inférieure à la longueur et à la largeur d'un facteur supérieur ou égal à 10.

A titre d'exemple, les éléments de décoration peuvent être des plaques d'épaisseur comprise entre 0,5 et 5 à 10 cm, de préférence entre 1 et 2 cm, la longueur et la largeur étant chacune comprise entre 5 et 200 cm, de préférence entre 10 et 40 cm. Lorsque l'on utilise une imprimante dans le cadre de la fabrication des éléments de décoration, la dimension maximale des éléments de décoration sera généralement limitée par la surface maximale d'impression de l'imprimante.

En faisant référence à la **figure 1****,** un élément de décoration 1 selon l'invention comprend un support 2, une couche intermédiaire 3, une couche picturale 7, et une couche de protection 6.

L'élément de décoration est fabriqué par formation successive des différentes couches, en commençant par le support 2.

Le support 2 est formé par dépôt et formage d'une composition de support humide. De préférence, on utilise un moule dans lequel la composition est coulée.

Toutefois, selon un mode de réalisation particulier (non représenté), on peut couler (c'est-à-dire déposer) la composition de support humide sur une structure de base. La structure de base fait alors partie de l'élément de décoration final: elle en constitue une couche supplémentaire, sous le support.

En revanche, dans le cas du moulage, il est possible d'obtenir un élément de décoration sans une telle structure de base. Il est toutefois également possible de prévoir une structure de base au fond du moule pour constituer une couche supplémentaire de l'élément de décoration (sous le support).

Toujours dans le cas du moulage, il est également possible de prévoir une structure de renforcement au fond du moule, destinée à être intégrée au support lui-même; cette structure de renforcement peut être par exemple une armature ou un treillis.

Le mode de réalisation dans lequel on utilise une structure de base est particulièrement avantageux pour les éléments de décoration ayant une surface relativement importante (par exemple 1 m² ou plus).

A titre de structure de base on utilise de préférence une plaque ou un panneau de construction préfabriqué. La structure de base doit être choisie de telle sorte qu'elle présente une bonne adhérence vis-à-vis de l'application d'un enduit ou d'une colle à carrelage, ainsi qu'une faible putrescibilité en présence d'humidité. On peut par exemple utiliser à titre de structure de base une panneau en contreplaqué, ou encore un panneau comprenant un noyau de mousse dure de polystyrène extrudé (de type « Styrofoam »), renforcé de part et d'autre par un treillis d'armature en fibres de verre, ledit treillis étant revêtu d'un mortier plastifié. Les panneaux de marque WEDI sont des exemples de tels panneaux.

La composition de support humide est obtenue principalement par mélange de chaux, de ciment et d'eau. Le ciment et la chaux peuvent être présents dans la composition en un rapport massique de 1:4 à 4:1, de manière particulièrement préférée de 3:7 à 7:3, idéalement de 2:3 à 3:2, voire de 9:11 à 11:9. Par exemple, le ciment et la chaux peuvent être présents dans un rapport massique approximativement égal à 1:1. L'eau de gâchage peut être présente en une proportion massique comprise entre 30 et 60%, de préférence entre 35 et 55%, idéalement entre 40 et 50% par rapport à la masse totale de la composition.

Le rôle principal du ciment est de conférer au support 2 et donc à l'élément de décoration 1 une solidité, c'est-à-dire notamment une résistance à la compression, satisfaisante.

A titre de ciment, on peut utiliser tout type de ciment, et notamment tout ciment défini à la norme EN 197-1. Il peut s'agir par exemple d'un ciment Portland (CEM I), d'un ciment Portland composé (CEM II), d'un ciment de hauts fourneaux (CEM III), d'un ciment pouzzolanique (CEM IV), d'un ciment au laitier et aux cendres ou ciment composé (CEM V).

A titre de chaux, on peut utiliser de la chaux aérienne ou de la chaux hydraulique.

La composition de support humide peut également comprendre divers additifs, dans une proportion massique de 0 à 30%, de préférence de 5 à 20%, par rapport à la masse sèche totale de la composition.

A titre d'additifs, il est par exemple possible d'inclure des liants complémentaires ou des fillers, notamment des pouzzolanes naturelles ou artificielles, du laitier, des cendres volantes, des fumées de silice, du kaolin, du métakaolin ou des mélanges de ces matériaux.

Bien que, selon un mode de réalisation particulier, la composition de support soit dépourvue de granulats, il est malgré tout possible de prévoir que la composition de support comprenne des granulats en tant qu'additifs.

La définition des granulats est ici celle de la norme XPP18-545. Les granulats comprennent du sable (grains de taille maximale Dmax inférieure à 4 mm, définie en tant que passant de tamis), et des gravillons (grains ou cailloux de taille minimale Dmin supérieure à 4 mm, définie en tant que refus de tamis).

Dans ce cas, de préférence, la composition de support comprend du sable mais est dépourvue de gravillons. De préférence, les granulats présents ont une taille maximale Dmax inférieure à 3 mm, voire inférieure à 2 mm et plus particulièrement inférieure à 1 mm. De préférence, les granulats sont présents dans la composition de support en une proportion massique inférieure à 20% ou inférieure à 10%, de préférence inférieure à 5%, de manière plus particulièrement préférée inférieure à 2% voire inférieure à 1%.

Avantageusement, on peut également prévoir dans la composition de support un ou plusieurs adjuvants classiquement utilisés dans le domaine: un accélérateur et / ou un agent entraîneur d'air et /ou un agent viscosant et / ou un retardateur et / ou un inertant des argiles et / ou un fluidifiant.

On peut également prévoir d'inclure un durcisseur coloré (mélange prêt à l'emploi de ciment, adjuvants, agrégats de forme et granulométrie sélectionnées pour leurs qualités physico-mécaniques) et / ou un hydrofuge de masse (composé conférant une étanchéité aux remontées capillaires et infiltrations d'eau) et / ou une résine d'adhérence (résine époxyde bi-composant sans solvant qui polymérise en milieu sec ou humide).

Il est également utile d'inclure des fibres, c'est-à-dire des macrofibres (de diamètre voisin de 1 mm) ou des microfibres (de diamètre compris entre 50 µm et 1 mm) ou un mélange de celles-ci. Les fibres peuvent être métalliques, synthétiques ou minérales. Des micro-fibres de polypropylène sont particulièrement appropriées. La présence de fibres permet de réduire l'épaisseur du support 2 tout en conservant une résistance à la compression satisfaisante.

Le rapport massique des fibres (et notamment des microfibres) par rapport au ciment, au sein de la composition de support humide, est de préférence compris entre 1:100 et 1:5, avantageusement entre 1:50 et 1:10, de préférence entre 1:25 et 1:12. Un rapport voisin de 1:15 est particulièrement approprié.

La proportion volumique des fibres dans la composition de support humide peut être par exemple comprise entre 0,1 et 10%, notamment entre 1 et 5%.

La composition de support humide résultante peut être un béton renforcé de fibres (BRF) ou un béton fibré à ultra hautes performances.

On choisit en général de former un support 2 ayant une épaisseur comprise entre 0,2 et 10 cm, de préférence entre 0,3 et 5 cm, de manière plus particulièrement préférée entre 0,4 et 2 cm. Une épaisseur typique de 1 cm est en général appropriée. Toutefois, dans le cas où l'on souhaite fabriquer des éléments de décoration de grande dimension, par exemple de surface supérieure ou égale à 1 m², il est approprié d'utiliser une épaisseur comprise entre 5 et 10 cm, et d'inclure une ou plusieurs armatures métalliques dans le support 2 pour plus de solidité.

Après le dépôt et le formage du support 2 à partir de la composition de support, on laisse la composition de support prendre, durcir et sécher. Eventuellement le séchage peut être accéléré par chauffage et / ou soufflage d'air. Le support 2 durci et sec ainsi obtenu est formé d'un matériau qui comprend des hydrates de ciment ainsi que de l'hydrate et / ou du carbonate de chaux.

Le terme hydrates de ciment recouvre toutes les espèces minérales obtenues par l'hydratation du ciment et notamment par hydratation de la composante clinker du ciment. En particulier, le ciment contient à titre de composants principaux du silicate tricalcique (C₃S), du silicate bicalcique (C₂S), de l'aluminate tricalcique (C₃A), de l'aluminoferrite (C₄AF), et à titre de composants minoritaires, notamment de la chaux libre, des sulfates alcalins.

Les hydrates de ciment sont donc obtenus par hydratation de ces composants. Les hydrates de ciment pourront par exemple comprendre de 40 à 80% en poids, de préférence de 50 à 70% en poids, de silicates de calcium hydratés (CSH), et de 20 à 40% en poids, de préférence de 25 à 30% en poids, de chaux hydratée ou hydrate de chaux Ca(OH)₂. Cette chaux hydratée pourra également avoir été partiellement transformée en la forme carbonatée (CaCO₃) par réaction avec du dioxyde de carbone.

Le support 2 (éventuellement disposé sur la structure de base) peut être préparé à l'avance et conservé en attendant de l'utiliser pour la fabrication de l'élément de décoration 1.

Par la suite, on dépose et on forme sur le support 2 sec une couche intermédiaire 3. Cette couche intermédiaire 3 est obtenue à partir d'un enduit comprenant de la chaux et de l'eau.

De préférence, l'enduit en question comprend au moins 70%, de manière plus particulièrement préférée au moins 80%, avantageusement au moins 90%, idéalement au moins 95%, en masse sèche, de chaux. Selon un mode particulier, l'enduit est obtenu par mélange de chaux pure avec de l'eau.

A titre de chaux, on peut utiliser de la chaux aérienne ou de la chaux hydraulique.

On peut également prévoir un ou plusieurs additifs en association avec la chaux, dans une proportion totale inférieure à 30%, de préférence inférieure à 20%, avantageusement inférieure à 10%, idéalement inférieure à 5% par rapport à la masse sèche totale de l'enduit.

A titre d'additifs on peut utiliser l'ensemble des additifs mentionnés ci-dessus en relation avec la composition de support, notamment du sable fin ou des fibres (particulièrement des micro-fibres). En outre on peut utiliser un désactivant de surface ou un coulis minéral coloré (composé de liantes, de quartz calibré, de fibres de polypropylène, de réducteur d'eau, de fluidifiant, de pigments colorants et d'agrégats de forme et granulométrie sélectionnée pour leur qualité physico-mécanique).

La proportion massique d'eau dans l'enduit est de préférence comprise entre 40 et 80%, de préférence entre 50 et 70%, idéalement entre 55 et 65% et notamment voisine d'environ 60% par rapport à la masse totale de l'enduit.

L'enduit est de préférence appliqué au moyen d'une spatule, d'une taloche, d'une langue de chat ou de tout autre moyen connu de l'homme du métier. L'application peut également être automatisée.

La couche intermédiaire 3 ainsi obtenue présente de préférence une épaisseur comprise entre 0,1 et 5 mm, notamment entre 0,3 et 3 mm, de manière plus particulièrement préférée entre 0,5 et 2 mm.

De manière générale l'homme du métier adaptera l'épaisseur de la couche intermédiaire 3 aux conditions extérieures, c'est-à-dire principalement les conditions de température et d'hygrométrie. Il faut éviter à ce stade que la couche intermédiaire 3 sèche trop rapidement. Par conséquent, en cas de faible hygrométrie par exemple, la couche intermédiaire 3 pourra avantageusement être plus épaisse qu'en cas d'hygrométrie importante.

De manière générale, au cours de la fabrication de l'élément de décoration, chaque couche peut être obtenue par décantation gravitationnelle, la chaux (relativement légère) migrant vers la surface et les grains plus lourds (sable...) migrant vers le fond. Ce phénomène peut être accéléré par l'application de vibrations.

Une fois la couche intermédiaire 3 formée, il convient d'appliquer une couche picturale 7. La couche picturale 7 contient des pigments et confère à l'élément de décoration l'aspect pictural recherché, c'est-à-dire l'aspect d'une image décorative.

Selon un premier mode de réalisation, la couche picturale 7 consiste en un unique film d'encre formant une image. Il est possible de prévoir pour ce faire l'application d'encre ou de peinture manuellement ou de façon automatisée, à l'aide d'un pinceau, d'un rouleau, d'un pistolet ou autre. Toutefois, le mode d'application préféré consiste à utiliser une imprimante numérique à jet d'encre à plat. Ainsi, on bénéficie d'une application très rapide, permettant de réaliser des images extrêmement précises avec une grande résolution, toutes les couleurs étant appliquées essentiellement simultanément. De plus la quantité d'encre appliquée est très faible. Ainsi, un film d'encre d'épaisseur 1 à 2 µm peut convenir.

Il est par exemple approprié d'utiliser une imprimante numérique à jet d'encre à buse piézoélectrique contrôlée par ordinateur.

L'encre peut contenir des pigments organiques (carbonés) ou métalliques (de type oxyde de titane).

De préférence, l'encre utilisée est une encre photosensible, c'est-à-dire susceptible de durcir sous l'effet d'un rayonnement ultraviolet. Un rayonnement ultraviolet est alors utilisé au moment même de l'application de l'encre, de préférence de manière automatisée par l'imprimante elle-même. Les encres de marque 3M ou AGFA sont par exemple appropriées.

Il est à noter que le terme « d'encre » tel qu'il est employé ici peut désigner de façon générale plusieurs encres élémentaires de couleurs différentes, utilisées en combinaison ou juxtaposition pour produire toutes les nuances de couleurs nécessaires à la réalisation de l'image souhaitée.

Quel que soit le mode retenu pour l'application d'encre, il est important que cette application soit effectuée alors que la couche intermédiaire 3 est encore humide, c'est-à-dire avant qu'elle soit prise et sèche. L'intervalle de temps séparant le dépôt de la couche intermédiaire 3 de l'application d'encre doit être adapté à cette fin. Cet intervalle de temps dépend des paramètres précis de mise en oeuvre du procédé de fabrication, c'est-à-dire notamment: la teneur en eau de la couche intermédiaire 3, l'épaisseur de celle-ci, la teneur en chaux et la qualité de chaux, les conditions extérieures de température et d'hygrométrie.

L'homme du métier pourra déterminer par inspection visuelle de la surface de l'élément de décoration le moment adapté à l'application de l'encre: généralement, tant que la surface est encore humide, des pores ouverts sont clairement visibles. Par ailleurs, un simple test consistant à appliquer une feuille de papier sur la surface permet de révéler l'état d'humidité de la surface: si la feuille de papier adhère à la surface, cela signifie que la surface est encore humide.

L'utilisation de dispositifs automatiques de mesure de l'humidité de la couche intermédiaire 3 connus dans l'industrie est également possible.

L'application d'au moins une couche d'encre sur un substrat humide est essentielle pour l'adhérence de la couche picturale 7 sur l'élément de décoration 1, et pour la durabilité de l'objet. En effet, la carbonatation de la chaux qui s'ensuit, par réaction avec le dioxyde de carbone de l'air, garantit une adhérence remarquable des pigments au substrat et forme une véritable barrière de protection. De la sorte, les pigments de l'encre deviennent réellement incorporés au substrat lui-même, la chaux servant de liant aux pigments dans le produit final.

Il faut noter qu'il reste toutefois toujours possible d'appliquer l'encre sur substrat sec, ce qui peut simplifier la fabrication de l'élément de décoration. La tenue de l'élément de décoration ainsi obtenu est cependant moindre, et le rendu (aspect « plastique » typique des impressions usuelles) est jugé moins bon par la majorité des utilisateurs, bien qu'il puisse être préféré par certains utilisateurs.

Selon un deuxième mode de réalisation, la couche picturale 7 comprend deux couches distinctes, à savoir un premier film d'encre 4 directement déposé sur la couche intermédiaire 3 encore humide, ainsi qu'un deuxième film d'encre 5 disposé sur le premier.

Dans ce cas, le premier film d'encre 4 doit être appliqué dans les mêmes conditions d'humidité de la couche intermédiaire 3 que ce qui est décrit ci-dessus en relation avec le premier mode de réalisation.

Avantageusement, ce premier film d'encre 4 consiste en une couche d'encre uniforme, par exemple une couche d'encre de couleur blanche. Une encre photosensible à base de blanc de titane (particules de dioxyde de titane) convient particulièrement.

Après application du premier film d'encre 4, on peut laisser l'élément de décoration 1 (et notamment la couche intermédiaire 3) sécher complètement. Le film d'encre 4 constitue alors une surface disponible pour la réception ultérieure du deuxième film d'encre 5. Il est donc possible de déposer le deuxième film d'encre 5 à tout moment, sans avoir à respecter de contraintes temporelles particulières. Ainsi, l'élément de décoration 1 peut être par exemple stocké, transporté, voire subir une commercialisation intermédiaire, avant l'application du deuxième film d'encre 5.

Le deuxième film d'encre 5 est dans ce cas celui qui est destiné à former l'image. Il présente avantageusement les mêmes caractéristiques que ce qui a été décrit ci-dessus en relation avec le premier mode de réalisation. L'adhérence du deuxième film d'encre 5 au premier film d'encre 4 est bonne car ils présentent une composition de nature similaire. Les problèmes liés à l'application d'encre directement sur une surface de chaux sèche en voie de carbonatation (aspect pulvérulent de la surface) ne se rencontrent pas ici puisque la surface à base de chaux est déjà recouverte d'une couche pigmentaire.

L'étape suivante, optionnelle, consiste à recouvrir la couche picturale 7 d'une couche de protection 6. Cette couche de protection 6 est de préférence incolore et transparente. Elle doit être adaptée à protéger la surface de l'objet des salissures et de l'usure. De préférence, la couche de protection 6 est de type hydrophobe, sans toutefois entraîner une imperméabilité totale. Il est en effet souhaitable que le coeur de l'élément de décoration 1 puisse continuer à effectuer des échanges chimiques avec l'environnement, notamment afin que la carbonatation se poursuive.

C'est pourquoi, s'il est envisageable d'employer un vernis ou une résine en guise de couche de protection 6, il est toutefois préférable d'utiliser une cire, notamment une cire poreuse, qui correspond davantage aux qualités souhaitées. A titre d'exemple, on peut utiliser une cire d'abeille, ou encore de préférence une cire à béton, par exemple la cire de type Bestcire®, qui est une émulsion à base de résine réticulée aux ions métalliques et de hauts polymères en phase aqueuse. Ses différents composants pénétrants lui permettent d'atteindre une patine remarquable ainsi qu'une excellente résistance au trafic et à l'eau, suivie d'un effet perlant sur les liquides.

Alternativement ou en combinaison, on peut utiliser une résine de finition anti-taches, qui est une émulsion non solvantée de résine mono-composante bouche-pores assurant une protection contre la dessiccation.

La couche de protection 6 est de préférence appliquée selon une épaisseur comprise entre 0,2 et 5 µm, de préférence entre 0,5 et 3 µm, de manière plus particulièrement préférée entre 0,8 et 2 µm.

### Utilisation des éléments de décoration

Les éléments de décoration ainsi produits sont utiles pour la réalisation de décors de grande taille, notamment de décors muraux (bien que la pose sur un sol, un plafond, ou tout autre type de surface soit également possible).

Pour cela, il suffit de diviser l'image que l'on souhaite appliquer en guise de décoration en parties élémentaires, par exemple selon un quadrillage, puis de fabriquer autant d'éléments de décoration que nécessaire, comme décrit ci-dessus, chaque élément de décoration étant revêtu d'une partie élémentaire de l'image ainsi divisée grâce à la couche picturale 7.

Cette opération est particulièrement aisée en utilisant un ordinateur et une imprimante numérique associée.

Une fois les différents éléments de décoration fabriqués, il suffit de fixer les éléments de décoration au support choisi et de les assembler dans l'ordre de sorte à reconstituer l'image souhaitée.

La fixation des éléments de décoration peut être effectuée par tout moyen connu de l'homme du métier, par exemple par vissage, clouage, collage. De préférence, les éléments de décoration sont fixés en utilisant un mortier-colle.

Il est généralement possible d'assembler les éléments de décoration de façon suffisamment précise pour éviter d'avoir à pratiquer un jointoiement. Si toutefois on souhaite former des joints entre les éléments de décoration, l'utilisation d'un matériau synthétique à base de polyuréthane est appropriée, puisque ce matériau peut être teinté. Un jointoiement est aussi possible en utilisant un enduit de chaux puis un lait de chaux coloré sur la surface, pour que le joint soit aussi peu visible que possible.

Il peut être utile d'appliquer une couche de protection supplémentaire sur le décor ainsi assemblé, et ce, que les éléments de décoration individuels soient déjà pourvus ou non d'une couche de protection 6. A cette fin, l'utilisation du même type de matière (notamment d'une cire poreuse de type cire à béton) que pour la couche de protection 6 est avantageuse.

On constate que la carbonatation de la chaux se poursuit pendant des mois voire des années, donc souvent même après la pose des éléments de décoration. Par conséquent, la résistance de ceux-ci ne fait que croître avec le temps. Ils ont également tendance à acquérir une patine caractéristique avec le temps, qui est agréable à la vue et au toucher.

Notons qu'il est également possible d'utiliser un unique élément de décoration afin de réaliser un décor, notamment lorsque cet élément de décoration est de grande taille. Il s'apparente alors à un tableau.

### EXEMPLE

Des éléments de décor sont réalisés selon le protocole suivant:
- On prépare des fichiers d'images numériques sur ordinateur.
- On réalise un coffrage pour former un moule pour la couche de support.
- On prépare un mélange de 5 kg de ciment Lafarge CEM2/B-LL 32,5 RC P2 blanc, de 5 kg de chaux hydraulique naturelle blanche NHL 3,5 Z, de 2,5 kg de sable fin et adjuvants, ainsi que de 11 litres d'eau. Alternativement, on prépare un mélange de 50%, en masse, de chaux, et 50%, en masse, de béton sec (comprenant 2/3 de ciment et 1/3 de sable fin et adjuvants), avec ajout de la quantité d'eau correspondante.
- Cette préparation est coulée dans le moule pour fournir le support, ou alternativement est enduite sur un panneau de construction de type WEDI.
- La couche intermédiaire est préparée à base de chaux pure, appliquée en couche fine par une langue de chat et une spatule large.
- Pour un premier échantillon, on réalise une impression directe à plat au moyen d'une imprimante ZUND 215 pilotée par ordinateur alors que la couche intermédiaire de chaux est encore humide.
- Pour un deuxième échantillon, on applique une première couche d'encre manuellement lorsque la couche intermédiaire de chaux est encore humide, puis on effectue une impression directe à plat au moyen de l'imprimante une fois l'élément de décoration complètement sec.
- On applique pour finir une couche de cire à béton Bestcire® avec un pinceau.

## Revendications

1. Elément de décoration (1) comprenant:
- un support (2) formé d'un matériau comprenant des hydrates de ciment et de l'hydrate et / ou carbonate de chaux;
- une couche intermédiaire (3) disposée sur le support (2), comprenant de l'hydrate et / ou carbonate de chaux;
- une couche picturale (7) disposée sur la couche intermédiaire (3), comprenant des pigments.

2. Elément de décoration (1) selon la revendication 1, dans lequel la couche picturale (7) comprend:
- au moins un film (4, 5) d'encre photosensible durcie, de couleur uniforme ou formant une image; et de préférence
- un premier film (4) d'encre photosensible de couleur uniforme, disposé sur la couche intermédiaire (3), ainsi qu'un deuxième film (5) d'encre photosensible formant une image, disposé sur le premier film.

3. Elément de décoration (1) selon la revendication 1 ou 2, comprenant également une structure de base sur laquelle est disposé le support (2), ladite structure de base étant de préférence une plaque ou un panneau de construction.

4. Elément de décoration (1) selon l'une des revendications 1 à 3, comprenant également une couche de protection (6) disposée sur la couche picturale (7), de préférence constituée de cire.

5. Elément de décoration (1) selon l'une des revendications 1 à 4, dans lequel le matériau du support (2) comprend:
- de 20 à 80%, de préférence de 30 à 70%, de manière plus particulièrement préférée de 40 à 60%, idéalement de 45 à 55%, en masse, d'hydrates de ciment; et
- de 20 à 80%, de préférence de 30 à 70%, de manière plus particulièrement préférée de 40 à 60%, idéalement de 45 à 55%, en masse, d'hydrate et / ou carbonate de chaux.

6. Elément de décoration (1) selon l'une des revendications 1 à 5, dans lequel la couche intermédiaire (3) comprend au moins 60%, de manière plus particulièrement préférée au moins 80%, avantageusement au moins 90%, idéalement au moins 95%, en masse, d'hydrate et / ou carbonate de chaux.

7. Elément de décoration (1) selon l'une des revendications 1 à 6, dans lequel:
- le support (2) présente une épaisseur comprise entre 0,2 et 10 cm, de préférence entre 0,3 et 5 cm, de manière plus particulièrement préférée entre 0,4 et 2 cm; et / ou
- la couche intermédiaire (3) présente une épaisseur comprise entre 0,1 et 5 mm, de préférence entre 0,3 et 3 mm, de manière plus particulièrement préférée entre 0,5 et 2 mm; et / ou
- la couche picturale (7) présente une épaisseur comprise entre 0,2 et 10 µm, de préférence entre 0,5 et 5 µm, de manière plus particulièrement préférée entre 0,8 et 3 µm; et / ou
- la couche de protection (6) présente une épaisseur comprise entre 0,2 et 5 µm, de préférence entre 0,5 et 3 µm, de manière plus particulièrement préférée entre 0,8 et 2 µm.

8. Procédé de fabrication d'un élément de décoration (1), comprenant successivement:
- la fourniture d'un support (2) formé d'un matériau comprenant des hydrates de ciment et de l'hydrate et /ou carbonate de chaux;
- la fourniture d'un enduit comprenant de la chaux et de l'eau;
- la formation d'une couche intermédiaire (3) sur le support (2) par application de l'enduit;
- le dépôt de pigments sur la couche intermédiaire (3), ladite couche intermédiaire (3) étant humide lors du dépôt; et
- le séchage de la couche intermédiaire (3).

9. Procédé selon la revendication 8, comprenant en outre préalablement la fabrication du support (2) par coulage, prise et séchage d'une composition de support humide comprenant du ciment et de la chaux, le ciment et la chaux étant de préférence dans un rapport massique de 1:4 à 4:1, de manière particulièrement préférée de 3:7 à 7:3, idéalement de 2:3 à 3:2, voire de 9:11 à 11:9.

10. Procédé selon la revendication 9, dans lequel:
- la composition de support humide est coulée dans un moule; ou
- la composition de support humide est coulée sur une structure de base, ladite structure de base étant de préférence une plaque ou un panneau de construction.

11. Procédé selon l'une des revendications 8 à 10, dans lequel le dépôt de pigments consiste en une impression d'un film d'encre photosensible formant une image, au moyen d'une imprimante numérique.

12. Procédé selon l'une des revendications 8 à 10 dans lequel le dépôt de pigments est effectué par application d'un film d'encre photosensible de couleur uniforme, le procédé comprenant de préférence une étape supplémentaire de dépôt de pigments après le séchage de la couche intermédiaire (3), de préférence par impression d'un film d'encre photosensible formant une image, au moyen d'une imprimante numérique.

13. Procédé selon l'une des revendications 8 à 12, comprenant une étape finale d'enduction de matériau de protection, de préférence de cire.

14. Procédé selon l'une des revendications 8 à 13, dans lequel l'élément de décoration (1) est selon l'une des revendications 1 à 7.

15. Procédé de fabrication d'un décor, comprenant:
- l'assemblage et la fixation d'un ou de plusieurs éléments de décoration (1) selon l'une des revendications 1 à 7, lesdits éléments de décoration (1) étant de forme plane, sur une surface plane, qui est de préférence un mur;
- éventuellement le jointoiement des éléments de décoration (1) fixés; et
- éventuellement l'application d'une couche de protection (6), de préférence de cire, sur les éléments de décoration (1) fixés.

## Claims

1. A decorative element (1) comprising:
- a substrate (2) formed from a material comprising cement hydrates and calcium hydroxide and/or carbonate;
- an intermediate layer (3) arranged on the substrate (2), comprising calcium hydroxide and/or carbonate;
- a picture layer (7) arranged on the intermediate layer (3), comprising pigments.

2. The decorative element (1) according to claim 1, wherein the picture layer (7) comprises:
- at least one film (4, 5) of hardened photosensitive ink, of uniform colour or forming an image; and preferably
- a first photosensitive ink film (4) of uniform colour, arranged on the intermediate layer (3), together with a second photosensitive ink film (5) forming an image, arranged on the first film.

3. The decorative element (1) according to claim 1 or 2, also comprising a base structure on which the substrate (2) is arranged, said base structure preferably being a building panel or board.

4. The decorative element (1) according to one of claims 1 to 3, also comprising a protective layer (6) arranged on the picture layer (7), preferably constituted of wax.

5. The decorative element (1) according to one of claims 1 to 4, wherein the material of the substrate (2) comprises:
- from 20 to 80%, preferably 30 to 70%, more particularly preferably 40 to 60%, ideally 45 to 55% by mass of cement hydrates; and
- from 20 to 80%, preferably 30 to 70%, more particularly preferably 40 to 60%, ideally 45 to 55% by mass of calcium hydroxide and/or carbonate.

6. The decorative element (1) according to one of claims 1 to 5, wherein the intermediate layer (3) comprises at least 60%, more particularly preferably at least 80%, advantageously at least 90%, ideally at least 95% by mass of calcium hydroxide and/or carbonate.

7. The decorative element (1) according to one of claims 1 to 6, wherein:
- the substrate (2) has a thickness comprised between 0.2 and 10 cm, preferably between 0.3 and 5 cm, more particularly preferably between 0.4 and 2 cm; and/or
- the intermediate layer (3) has a thickness comprised between 0.1 and 5 mm, preferably between 0.3 and 3 mm, more particularly preferably between 0.5 and 2 mm; and/or
- the picture layer (7) has a thickness comprised between 0.2 and 10 µm, preferably between 0.5 and 5 µm, more particularly preferably between 0.8 and 3 µm; and/or
- the protective layer (6) has a thickness comprised between 0.2 and 5 µm, preferably between 0.5 and 3 µm, more particularly preferably between 0.8 and 2 µm.

8. A method of producing a decorative element (1), comprising successively:
- supplying a substrate (2) formed from a material comprising cement hydrates and calcium hydroxide and/or carbonate;
- supplying a plaster comprising lime and water;
- forming an intermediate layer (3) on the substrate (2) by application of the plaster;
- depositing pigments on the intermediate layer (3), said intermediate layer (3) being damp during deposition; and
- drying the intermediate layer (3).

9. The method according to claim 8, further comprising producing beforehand the substrate (2) by casting, setting and drying a wet substrate mixture comprising cement and lime, the cement and lime preferably being in a mass ratio of 1:4 to 4:1, particularly preferably 3:7 to 7:3, ideally 2:3 to 3:2, or even 9:11 to 11:9.

10. The method according to claim 9, wherein:
- the wet substrate mixture is cast in a mould; or
- the wet substrate mixture is cast onto a base structure, said base structure preferably being a building panel or board.

11. The method according to one of claims 8 to 10, wherein the depositing of pigments consists in printing a photosensitive ink film forming an image, by means of a digital printer.

12. The method according to one of claims 8 to 10 wherein the deposition of pigments is carried out by application of a film of photosensitive ink of uniform colour, the method preferably comprising an additional step of deposition of pigments after the drying of the intermediate layer (3), preferably by printing a film of photosensitive ink forming an image, using a digital printer.

13. The method according to one of claims 8 to 12, comprising a final step of coating with protective material, preferably wax.

14. The method according to one of claims 8 to 13, wherein the decorative element (1) is according to one of claims 1 to 7.

15. A method of producing a decoration, comprising:
- assembling and fixing one or more decorative elements (1) according to claims 1 to 7, said decorative elements (1) being flat, on a flat surface, which is preferably a wall;
- optionally, jointing the fixed decorative elements (1); and
- optionally, applying a protective layer (6), preferably wax, on the fixed decorative elements (1).

## Patentansprüche

1. Dekorationselement (1), welches umfasst:
- einen Träger (2), der aus einem Material ausgebildet ist, welches Zementhydrate und Calciumhydroxid und/oder Calciumcarbonat umfasst;
- eine auf dem Träger (2) angeordnete Zwischenschicht (3), welche Calciumhydroxid und/oder Calciumcarbonat umfasst;
- eine auf der Zwischenschicht (3) angeordnete Bildschicht (7), welche Pigmente umfasst.

2. Dekorationselement (1) nach Anspruch 1, wobei die Bildschicht (7) umfasst:
- mindestens einen Film (4, 5) aus erhärteter lichtempfindlicher Druckfarbe, der von einheitlicher Farbe ist oder ein Bild bildet; und vorzugsweise
- einen ersten Film (4) aus lichtempfindlicher Druckfarbe von einheitlicher Farbe, der auf der Zwischenschicht (3) angeordnet ist, sowie einen zweiten Film (5) aus lichtempfindlicher Druckfarbe, der ein Bild bildet und auf dem ersten Film angeordnet ist.

3. Dekorationselement (1) nach Anspruch 1 oder 2, welches außerdem eine Grundstruktur umfasst, auf welcher der Träger (2) angeordnet ist, wobei die Grundstruktur vorzugsweise eine Bauplatte oder eine Bautafel ist.

4. Dekorationselement (1) nach einem der Ansprüche 1 bis 3, welches außerdem eine auf der Bildschicht (7) angeordnete Schutzschicht (6) umfasst, die vorzugsweise aus Wachs besteht.

5. Dekorationselement (1) nach einem der Ansprüche 1 bis 4, wobei das Material des Trägers (2) umfasst:
- 20 bis 80 Gew.-%, vorzugsweise 30 bis 70 Gew.-%, stärker bevorzugt 40 bis 60 Gew.-%, idealerweise 45 bis 55 Gew.-% Zementhydrate; und
- 20 bis 80 Gew.-%, vorzugsweise 30 bis 70 Gew.-%, stärker bevorzugt 40 bis 60 Gew.-%, idealerweise 45 bis 55 Gew.-% Calciumhydroxid und/oder Calciumcarbonat.

6. Dekorationselement (1) nach einem der Ansprüche 1 bis 5, wobei die Zwischenschicht (3) mindestens 60 Gew.-%, stärker bevorzugt mindestens 80 Gew.-%, vorteilhafterweise mindestens 90 Ges.-%, idealerweise mindestens 95 Gew.-% Calciumhydroxid und/oder Calciumcarbonat umfasst.

7. Dekorationselement (1) nach einem der Ansprüche 1 bis 6, wobei:
- der Träger (2) eine Dicke im Bereich von 0,2 bis 10 cm, vorzugsweise von 0,3 bis 5 cm, stärker bevorzugt von 0,4 bis 2 cm aufweist; und/oder
- die Zwischenschicht (3) eine Dicke im Bereich von 0,1 bis 5 mm, vorzugsweise von 0,3 bis 3 mm, stärker bevorzugt von 0,5 bis 2 mm aufweist; und/oder
- die Bildschicht (7) eine Dicke im Bereich von 0,2 bis 10 µm, vorzugsweise von 0,5 bis 5 µm, stärker bevorzugt von 0,8 bis 3 µm aufweist; und/oder
- die Schutzschicht (6) eine Dicke im Bereich von 0,2 bis 5 µm, vorzugsweise von 0,5 bis 3 µm, stärker bevorzugt von 0,8 bis 2 µm aufweist.

8. Verfahren zur Herstellung eines Dekorationselements (1), welches nacheinander umfasst:
- das Bereitstellen eines Trägers (2), der aus einem Material ausgebildet ist, welches Zementhydrate und Calciumhydroxid und/oder Calciumcarbonat umfasst;
- das Bereitstellen einer Überzugsmasse, welche Kalk und Wasser enthält;
- das Ausbilden einer Zwischenschicht (3) auf dem Träger (2) durch Aufbringung der Überzugsmasse;
- das Ablagern von Pigmenten auf der Zwischenschicht (3), wobei die Zwischenschicht (3) während der Ablagerung feucht ist; und
- das Trocknen der Zwischenschicht (3).

9. Verfahren nach Anspruch 8, welches außerdem zuvor die Herstellung des Trägers (2) durch Gießen, Abbinden und Trocknen einer feuchten Trägerzusammensetzung umfasst, welche Zement und Kalk umfasst, wobei der Zement und der Kalk vorzugsweise in einem Massenverhältnis im Bereich von 1:4 bis 4:1, besonders bevorzugt von 3:7 bis 7:3, idealerweise von 2:3 bis 3:2 oder sogar von 9:11 bis 11:9 vorliegen.

10. Verfahren nach Anspruch 9, wobei:
- die feuchte Trägerzusammensetzung in einer Form gegossen wird; oder
- die feuchte Trägerzusammensetzung auf einer Grundstruktur gegossen wird, wobei die Grundstruktur vorzugsweise eine Bauplatte oder eine Bautafel ist.

11. Verfahren nach einem der Ansprüche 8 bis 10, wobei das Ablagern von Pigmenten in einem Drucken eines Films aus lichtempfindlicher Druckfarbe, der ein Bild bildet, mittels eines Digitaldruckers besteht.

12. Verfahren nach einem der Ansprüche 8 bis 10, wobei das Ablagern von Pigmenten durch Aufbringen eines Films aus lichtempfindlicher Druckfarbe von einheitlicher Farbe durchgeführt wird, wobei das Verfahren vorzugsweise einen zusätzlichen Schritt des Ablagerns von Pigmenten nach dem Trocknen der Zwischenschicht (3) umfasst, vorzugsweise durch Drucken eines Films aus lichtempfindlicher Druckfarbe, der ein Bild bildet, mittels eines Digitaldruckers.

13. Verfahren nach einem der Ansprüche 8 bis 12, welches einen abschließenden Schritt des Beschichtens mit einem Schutzmaterial, vorzugsweise Wachs, umfasst.

14. Verfahren nach einem der Ansprüche 8 bis 13, wobei das Dekorationselement (1) ein Dekorationselement nach einem der Ansprüche 1 bis 7 ist.

15. Verfahren zur Herstellung eines Dekors, welches umfasst:
- das Zusammenfügen und das Befestigen eines oder mehrerer Dekorationselemente (1) nach einem der Ansprüche 1 bis 7, wobei die Dekorationselemente (1) von ebener Form sind, auf einer ebenen Fläche, welche vorzugsweise eine Wand ist;
- gegebenenfalls das Verfugen der befestigten Dekorationselemente (1); und
- gegebenenfalls das Aufbringen einer Schutzschicht (6), vorzugsweise aus Wachs, auf den befestigten Dekorationselementen (1).
